# EUROPEAN PATENT SPECIFICATION

(11) **EP 3 379 330 B1**
(45) Date of publication and mention of the grant of the patent: **21.10.2020**
(21) Application number: 17161816.8
(22) Date of filing: 20.03.2017
(51) Int. Cl.: G03B 17/02

(54) **AN IMAGING SYSTEM FOR A MOTOR VEHICLE**
BILDGEBUNGSSYSTEM FÜR EIN KRAFTFAHRZEUG
SYSTÈME D'IMAGERIE POUR VÉHICULE À MOTEUR

(43) Date of publication of application: 26.09.2018
(73) Proprietor: Veoneer Sweden AB, 447 83 Vårgårda (SE)
(72) Inventor: Rundqvist, Niklas, 613 37 Oxelösund (SE); Fredriksson, Peter, 58422 Linköping (SE); Persson, Madeleine, 58236 Linköping (SE); Wigren, Roger, 58337 Linköping (SE)
(74) Representative: Müller Verweyen

(56) References cited:
- WO-A1-2005/073761
- US-A1- 2012 037 820
- US-A1- 2015 002 737
- US-A1- 2015 334 278
- US-B1- 6 203 366

## Description

The invention relates to an imaging system for a motor vehicle comprising the features of the preamble of claim 1.

An imaging system for a motor vehicle comprising the features of the preamble of claim 1 is known for example from the EP 2 942 939 A1.

The imaging system comprises a camera housing part and at least one camera module to be mounted to said camera housing part, wherein the camera module comprises a lens objective, a lens holder holding said lens objective, an image sensor and a back plate holding said image sensor.

A camera module in which a lens is attached to the camera module by being clamped by a lens cover and a positioning ring, wherein the lens cover is fixed by partially engaging protrusions of the lens holder, is known from the US 2012/0037820 A1.

The camera module is attached by rotation locking means. The rotation locking means cooperate with each other in order to realize predefined orientation and alignment of the camera module and may comprise bores and corresponding pins. Therefore, it is prevented that the camera module may change its position or orientation with respect to a roll angle after the attachment at the camera housing part and after the attachment of the imaging system at a vehicle.

The attachment of the camera module in the camera housing part is realized by several assembly steps. First of all, the camera module needs to be arranged in a predefined position considering the final alignment and orientation. In the next step, the camera module is fixed to the housing part via said pins engaging said bores in a predefined roll angle. Nevertheless, the position may vary from the predefined position by e.g. different mounting forces or tolerances of the bores and pins. This may eventually lead to tilting of the camera module.

With respect to this prior art it is the object of this invention to provide an imaging system in which the attachment of the camera module in the camera housing part is further facilitated and which enables an improved accuracy of the attachment and orientation of the camera module with respect to a predefined mounting position and orientation, while concurrently reducing parts and steps used for fixing the camera module.

According to the invention, an imaging system is suggested comprising the features of claim 1, while further preferred embodiments are contained in the dependent claims.

According to the basic idea of the invention it is suggested that the camera module is provided with one or more radially outwardly directed protrusions and a closed retainer ring, wherein the retainer ring is elastically deformable, and the retainer ring comprises a first ring element made from a rigid material and a second ring element made from a flexible material, and the retainer ring is attached by pushing it over the at least one protrusions under elastic deformation of the retainer ring to an attachment position, wherein the camera module is attached to the camera housing part by being clamped to the housing part when the retainer ring is in the attached position.

The suggested imaging system comprises several advantages. By using a closed retainer ring, only one part is used for the attachment. Assembling the imaging system is realized by inserting of the camera module into an opening of the camera housing and pushing the retainer ring over the camera module to the attachment position. In the attachment position the retainer ring is arranged between the outwardly directed protrusions of the camera module and a surface of the camera housing part. In the attachment position the retainer ring engages the protrusions and is therefore fixed against movement towards and slipping over the protrusions. Furthermore, the solution enables an attachment in a single opening without additional bores or the like with equal distributed clamping forces between the retainer ring and the camera housing part. By realizing the retainer ring with a first ring element made from a rigid material, engaging of the first ring element with the protrusions of the camera module enables position-fixed orientation of the camera module and consumes tolerance faults in the assembly. According to the invention, rigid material is to be understood as a material that allows for assembling of the retainer ring and the camera module. Therefore, the rigid material is elastically deformable in a way that allows the retainer ring to be bent outwardly, when being pushed over the protrusions, without cracking. Providing the retainer ring with a second ring element made from a flexible material enables for equally distributed load at the camera housing part and proper sealing of the opening of the camera housing part. According to the invention, flexible material is to be understood as highly flexible and elastically deformable with much less effort compared to the rigid material of the first ring element. The flexible material may therefore be a rubber-like material. The maximum load of the camera module and the camera housing in the areas of the attachment may be reduced, which results in a reduced influence of the attachment forces to the final orientation of the camera module in the attachment position.

Furthermore, the first ring element of the retainer ring may be partially slit around its perimeter along a length axis of the camera module. The length axis of the camera module represents the direction along which the retainer ring is moved to slip over the protrusions until it clips behind the protrusions to the attachment position. The retainer ring being partially slit along this axis, leads to several tab- or tooth-like elements extending between the slits. When moving the retainer ring along the camera module towards the attachment position, the tooth-elements may be elastically deformed easier, i.e. with less force needed to push the rigid part of the retainer ring over the protrusions. The tooth-like elements are bent outwardly, while slipping over the protrusions with much less force effort.

Furthermore, the slits in the perimeter of the first ring element may be arranged equidistant in a circumferential direction. With equidistant slits and therefore tooth-like elements having the same width, the pushing forces are equally distributed in a circumferential direction preventing tilting of the retainer ring while being pushed to its attachment position.

Furthermore, the distance between two adjacently arranged slits may be smaller than the width of the at least one protrusions of the camera module in circumferential direction. This results in that at least two of the tooth-like elements of the retainer ring are in touch condition with each protrusion of the camera module, further reducing the force efforts when pushing the retainer ring into its attachment position. Furthermore, it is preferred that the slits may be filled with said flexible material of said second ring element of the retainer ring, which supports the elastic deformation and allows for a closed surface of the retainer ring supporting the sealing of the opening of the camera housing.

Furthermore, it is suggested that the first ring element of the retainer ring comprises a first tubular part and a collar extending radially inwardly from the tubular part. The retainer ring may act thereby additionally as a protection for the camera module by surrounding the camera module partially and especially the lens objective at the front side with the tubular part. The retainer ring is only engaging with the collar between the protrusions and the surface of the camera housing part, which fixes the camera module in the camera housing part, wherein the tubular part is not loaded. Furthermore, the assembly is facilitated because the retainer ring may be handled easier by grasping the retainer ring at the tubular part from the side opposing the collar and pushing it over the camera module and the protrusions with the collar. The collar is arranged at the end of the first tubular part, which is faced towards the surface of the camera housing part in the mounted position, so that the retainer ring is pushed in a first step with the collar over the protrusions when mounting the camera module at the camera housing via the retainer ring and moved over the protrusions until the final attachment position is reached.

According to a further preferred embodiment it is suggested that the slits extend from the first tubular part to the collar. Thereby, the collar extending between two adjacent slits is part of one of the tooth-like elements facilitating easier attachment of the camera module by pushing the collar part of the retainer ring over the protrusions with less force effort.

It is further preferred to provide the second ring element of the retainer ring with a second tubular part, adjacently arranged to the collar in direction of the length axis of the camera module. With the second tubular part facing to the camera housing and made from a flexible material, e.g. rubber-like soft plastic, it performs as a gasket and supports sealing of the opening of the camera housing part.

According to a further preferred embodiment it is suggested that the camera module comprises a cylindrical shape, and the retainer ring comprises a circular ring shape. The retainer ring is therefore loaded by an equally distributed load when attached to the camera housing and the assembly is facilitated since the retainer ring may be attached independent from its circumferential orientation.

In the following the invention shall be illustrated on the basis of preferred embodiments with reference to the accompanying drawings, wherein:
- Fig. 1: shows a camera module;
- Fig. 2A to 2C: shows different lens holders with different protrusions;
- Fig. 3A to 3B: shows a retainer ring;
- Fig. 4A to 4C: shows an imaging system with a camera housing part and the camera module in different views.

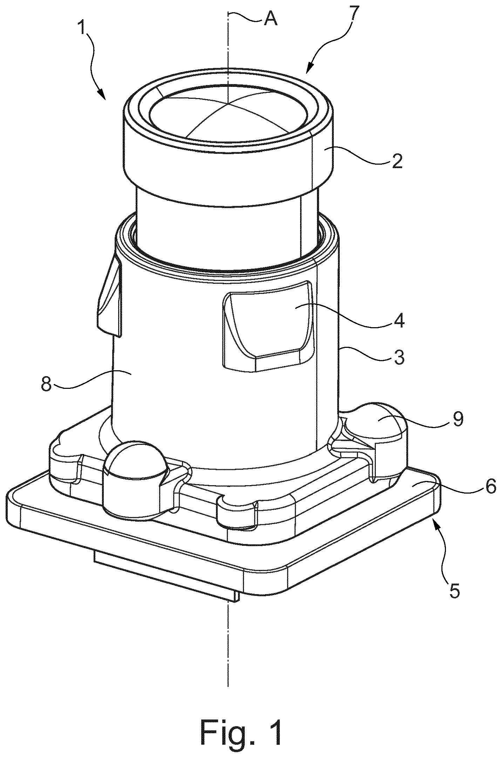

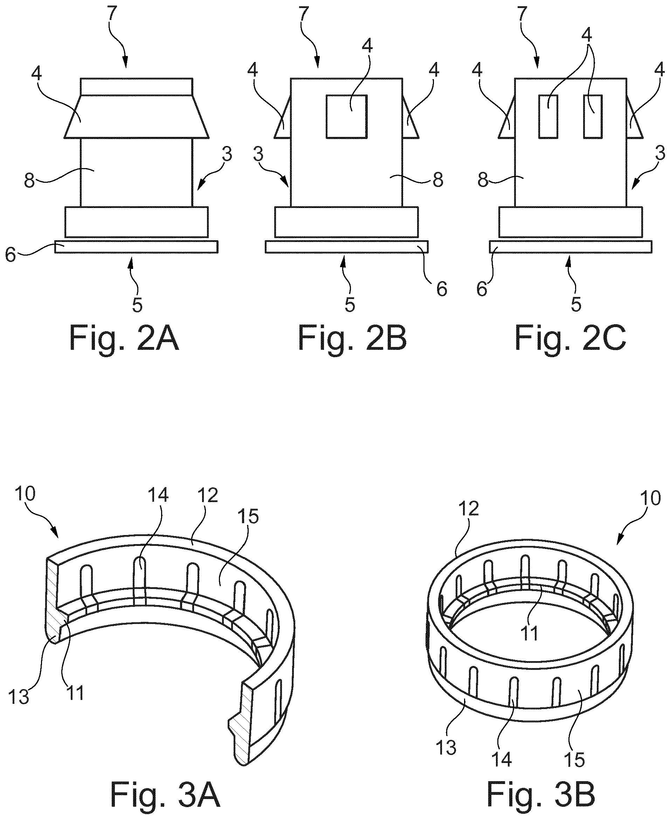

In Fig. 1 it is shown a camera module 1 as a preassembled module comprising as basic components a lens objective 2, a lens holder 3 holding said lens objective 2 and a printed circuit board 6 fixed at the lens holder 3. The lens objective 2 may be screwed into the lens holder 3 and may comprise itself a stack of several single lenses. The printed circuit board 6 may comprise a not shown image sensor which is positioned in a predefined position in relation to the lens objective 2 at the back end 5 of the camera module 1, so that the light entering through the lenses of the lens objective 2 from the front end 7 of the camera module 1 hits onto the image sensor from a predefined direction. The lens holder 3 can be seen as a central part of the camera module 1 as it serves to fix the lens objective 2 and also the printed circuit board 6, so both parts are aligned in relation to each other because of the fixation at a common part. The lens holder 3 is designed with a cylindrical tube body 8. Furthermore, the lens holder 3 is provided with protrusions 4, which are designed with a conical surface having an increasing thickness in the direction towards the back end 5 of the camera module 1. Furthermore, centering surfaces 9 may be provided at the back end part 5 of the camera module 1. Three different types of lens holders 3 are shown in Fig. 2A to 2C. In Fig. 2A, the lens holder 3 is designed as a cylindrical tube body 8 provided with a single protrusion 4 extending circularly in a circumferential direction of the tube body 8. Therefore, the protrusion 4 has an increasing thickness in the direction of the back end 5 of the camera module 1. Other embodiments of the tube body 8 are shown in Fig. 2B and 2C with four, respectively six protrusions 4 arranged in a circumferential direction of the tube body 8. Other designs of the protrusions 4 may also be possible, if they allow for pushing the retainer ring 10 over the protrusions 4 as well as for snapping with the collar 11 of the retainer ring 10 behind the backside of the protrusions 4.

The retainer ring 10 is shown in Figs. 3A and 3B presenting an embodiment comprising a first ring element 12 made from a rigid material and a second ring element 13 made from a flexible material and a collar 11 with slits 14 extending from the first ring element 12 to the collar 11. Those parts of the first ring element 12 and the collar 11 which are arranged between two slits 14 represent a tooth-like element 15. The second ring element 13 is made of a flexible material and the slits 14 are filled with the same material. A rubber-like soft plastic (polymer, elastomer or rubber material) can be used for these parts as it easily allows for elastic deformation when the retainer ring 10 is pushed over the protrusions 4. When the retainer ring 10 is pushed onto the protrusions 4, the collar 11 parts of the tooth-like elements 15 are in contact with the protrusions 4 and bend outwardly following the increasing thickness of the protrusions 4. Therefore, the rigid material of the first ring element 12 have to be elastically deformable to an amount allowing the tooth-like elements 15 to bend outwardly when being pushed over the protrusions 4 without cracking. The slits 14 allow for a bending with less bending force needed compared to a retainer ring 10 without slits 14, while the flexible, elastomeric filling of the slits 14 maintains a closed surface and sealing of the retainer ring 10.

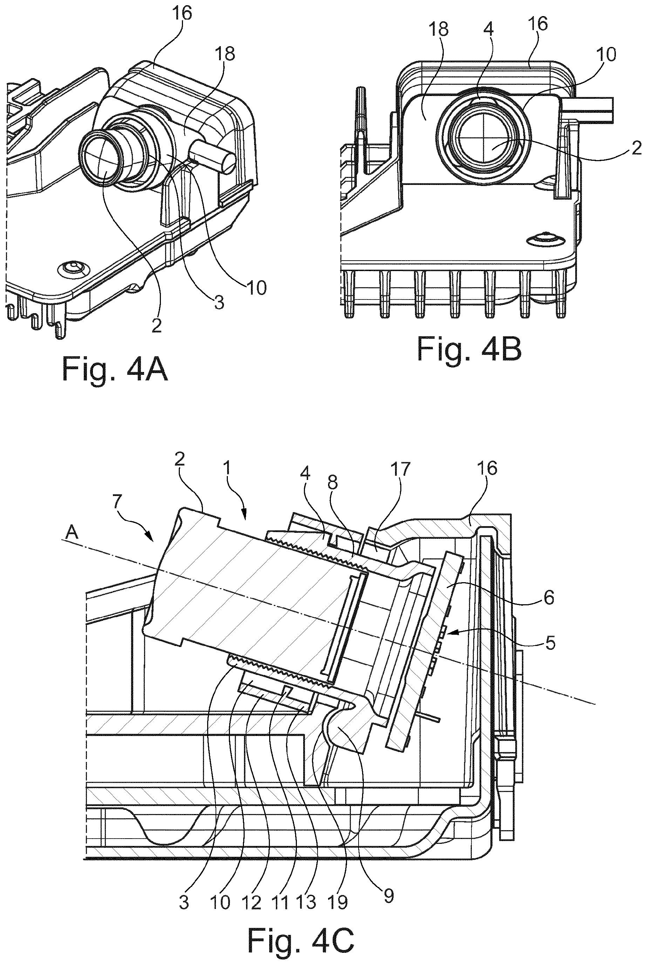

In the Figs. 4A to 4C it is shown the imaging system with a camera housing part 16 and the camera module 1 attached thereto. The camera module 1 is arranged in an opening 17 of the mounting surface 18 of the camera housing part 16 and fixed by a retainer ring 10 like described in the following. The camera module 1 is inserted with the lens objective 2 in a first step from the back side of the mounting surface 18 into the opening 17. The retainer ring 10 comprises a first tubular part 12 and a radially inwardly directed collar 11 like shown in Fig. 4C. Furthermore, the retainer ring 10 is designed either by choice of a special material and/or by designing a special geometry with for example weakened sections in an elastically deformable manner, so that the retainer ring 10 may, in a second step, be pushed with the collar 11 under elastic deformation over the protrusions 4 and snapping with the collar 11 behind the backside of the protrusions 4 to the attachment position. The thickness of the retainer ring 10 or of the collar 11 in the direction of the length axis A is designed so that the thickness of the collar 11 including the thickness of the elastomeric second ring element 13 is approximately identical or slightly greater than the distance between the surface 18 of the camera housing part 16 and the side of the protrusions 4 facing towards the surface 18 of the housing part 16 like shown in Fig. 4C. Therefore, the second ring element 13 is loaded by a pressure force and deformed when the camera module 1 is fixed in the mounting position by the retainer ring 10 to tighten and seal the opening 17 of the camera housing part 16. The protrusions 4 are designed with conical surface with in axial direction towards the camera housing part 16 increasing thickness, wherein the conical outer surfaces may also be shaped spherical in circumferential direction. Therefore, the retainer ring 10 is deformed continuously increasing when the retainer ring 10 is pushed over the protrusions 4, which facilitates the mounting process.

To avoid changes in the roll angle of the camera objective 2, centering surfaces 9 may be provided, so that the camera module 1 may dive with the centering surfaces 9 into recesses 19 provided at the camera housing part 16, to a predetermined position in axial as well as in circumferential direction like shown in Figure 4C. When the camera module 1 is mounted in the attachment position, the centering surfaces 9 are pressed into the corresponding recesses 19 and the protrusions 4 are pressed with their end faces against the collar 11 of the retainer ring 10 and the retainer ring 10 finally against the surface 18 of the camera housing part 16, so that the camera module 1 is attached to the camera housing part 16 by clamping.

The mounting process of the camera module 1 needs therefore only two steps, inserting of the camera module 1 into the opening 17 and pushing the retainer ring 10 over the lens holder 3 to the attachment position. Since the image sensor is arranged in a fixed position with respect to the lens holder 3 and the lens objective 2 is also fixed at the lens holder 3, the lens objective 2 got an orientation and position relating to the image sensor which is independent from the mounting of the camera module 1 at the camera housing part 16.

## Claims

1. An imaging system for a motor vehicle, comprising
- a camera housing part (16) and at least one camera module (1) to be mounted to said camera housing part (16), **characterized in that**
- the camera module (1) is provided with at least one radially outwardly directed protrusion (4), and
- a closed retainer ring (10) is provided in the camera housing part, wherein
- the closed retainer ring (10) is elastically deformable, and
- the closed retainer ring (10) comprises a first ring element (12) made from a rigid material and a second ring element (13) made from a flexible material, and
- the closed retainer ring (10) is attached to the camera module by pushing it over the at least one protrusion (4) under elastic deformation of the closed retainer ring (10) to an attachment position, wherein
- in the attachment position the closed retainer ring (10) is arranged between the at least one outwardly directed protrusion (4) of the camera module (1) and a surface of the camera housing part (16), and
- the camera module (1) is attached to the camera housing part (16) by being clamped to the camera housing part (16) when the closed retainer ring (10) is in the attachment position.

2. An imaging system according to claim 1, **characterized in that**,
- the first ring element (12) of the closed retainer ring (10) is partially slit (14) around its perimeter along a length axis (A) of the camera module (1).

3. An imaging system according to claim 2, **characterized in that**,
- the slits (14) in the perimeter of the first ring element (12) are arranged equidistant in a circumferential direction.

4. An imaging system according to claim 2 or 3, **characterized in that**,
- the distance in circumferential direction between two adjacently arranged slits (14) is smaller than the width of the at least one protrusion (4) of the camera module (1) in circumferential direction.

5. An imaging system according to one of the claims 2 to 4, **characterized in that**,
- the slits (14) are filled with said flexible material of said second ring element (13) of the retainer ring (10).

6. An imaging system according to any of the claims 2 to 5, **characterized in that**,
- the first ring element (12) of the retainer ring (10) comprises a first tubular part and a collar (11) extending radially inwardly from the first tubular part.

7. An imaging system according to claim 6, **characterized in that**,
- the slits (14) extend from the first tubular part (12) to the collar (11).

8. An imaging system according to claim 6 or 7, **characterized in that**,
- the second ring element (13) of the retainer ring (10) comprises a second tubular part, arranged adjacently to the collar (11) in direction of the length axis (A) of the camera module (1).

9. An imaging system according to any of the preceding claims, **characterized in that**,
- the camera module (1) comprises a cylindrical shape, and
- the closed retainer ring (10) comprises a circular ring shape.

## Patentansprüche

1. Ein Bildgebungssystem für ein Kraftfahrzeug, wobei das Bildgebungssystem umfasst:
- ein Kameragehäuseteil (16) und wenigstens ein Kameramodul (1), das an dem Kameragehäuseteil (16) zu montieren ist, **dadurch gekennzeichnet, dass**
- das Kameramodul (1) mit wenigstens einem radial nach außen gerichteten Vorsprung (4) versehen ist, und
- in dem Kameragehäuseteil ein geschlossener Haltering (10) vorgesehen ist, wobei
- der geschlossene Haltering (10) elastisch verformbar ist, und
- der geschlossene Haltering (10) ein erstes Ringelement (12), das aus einem starren Material hergestellt ist, und ein zweites Ringelement (13), das aus einem flexiblen Material hergestellt ist, umfasst, und
- der geschlossene Haltering (10) dadurch an dem Kameramodul befestigt wird, dass er unter elastischer Verformung des geschlossenen Halterings (10) über den wenigstens einen Vorsprung (4) in eine Befestigungsposition geschoben wird, wobei
- der geschlossene Haltering (10) in der Befestigungsposition zwischen dem wenigstens einen nach außen gerichteten Vorsprung (4) des Kameramoduls (1) und einer Oberfläche des Kameragehäuseteils (16) angeordnet ist, und
- das Kameramodul (1) dadurch an dem Kameragehäuseteil (16) befestigt wird, dass es an das Kameragehäuseteil (16) geklemmt wird, wenn der geschlossene Haltering (10) in der Befestigungsposition ist.

2. Ein Bildgebungssystem nach Anspruch 1, **dadurch gekennzeichnet, dass**
- das erste Ringelement (12) des geschlossenen Halterings (10) um seinen Umfang entlang einer Längsachse (A) des Kameramoduls (1) teilweise geschlitzt (14) ist.

3. Ein Bildgebungssystem nach Anspruch 2, **dadurch gekennzeichnet, dass**
- die Schlitze (14) in dem Umfang des ersten Ringelements (12) in einer Umfangsrichtung äquidistant angeordnet sind.

4. Ein Bildgebungssystem nach Anspruch 2 oder 3, **dadurch gekennzeichnet, dass**
- die Entfernung zwischen zwei benachbart angeordneten Schlitzen (14) in der Umfangsrichtung kleiner als die Breite des wenigstens einen Vorsprungs (4) des Kameramoduls (1) in der Umfangsrichtung ist.

5. Ein Bildgebungssystem nach einem der Ansprüche 2 bis 4, **dadurch gekennzeichnet, dass**
- die Schlitze (14) mit dem flexiblen Material des zweiten Ringelements (13) des Halterings (10) gefüllt sind.

6. Ein Bildgebungssystem nach einem der Ansprüche 2 bis 5, **dadurch gekennzeichnet, dass**
- das erste Ringelement (12) des Halterings (10) ein erstes rohrförmiges Teil und einen Bund (11), der von dem ersten rohrförmigen Teil radial nach innen verläuft, umfasst.

7. Ein Bildgebungssystem nach Anspruch 6, **dadurch gekennzeichnet, dass**
- die Schlitze (14) von dem ersten rohrförmigen Teil (12) in den Bund (11) verlaufen.

8. Ein Bildgebungssystem nach Anspruch 6 oder 7, **dadurch gekennzeichnet, dass**
- das zweite Ringelement (13) des Halterings (10) ein zweites rohrförmiges Teil umfasst, das in Richtung der Längsachse (A) des Kameramoduls (1) benachbart zu dem Bund (11) angeordnet ist.

9. Ein Bildgebungssystem nach einem der vorhergehenden Ansprüche, **dadurch gekennzeichnet, dass**
- das Kameramodul (1) eine Zylinderform umfasst, und
- der geschlossene Haltering (10) eine Kreisringform umfasst.

## Revendications

1. Un système d'imagerie pour un véhicule à moteur, comprenant
- une partie de boîtier de caméra (16) et au moins un module de caméra (1) destiné à être monté sur ladite partie de boîtier de caméra (16), **caractérisé en ce**
- **que** le module de caméra (1) est pourvu d'au moins une saillie (4) dirigée radialement vers l'extérieur, et
- **qu'**une bague de retenue fermée (10) est prévue dans la partie de boîtier de caméra, dans lequel
- la bague de retenue fermée (10) est déformable élastiquement, et
- la bague de retenue fermée (10) comprend un premier élément de bague (12) réalisé à partir d'un matériau rigide et un second élément de bague (13) réalisé à partir d'un matériau flexible, et
- la bague de retenue fermée (10) est fixée au module de caméra en la poussant sur l'au moins une saillie (4) sous la déformation élastique de la bague de retenue fermée (10) vers une position de fixation, dans lequel
- dans la position de fixation, la bague de retenue fermée (10) est agencée entre l'au moins une saillie (4) dirigée vers l'extérieur du module de caméra (1) et une surface de la partie de boîtier de caméra (16), et
- le module de caméra (1) est fixé à la partie de boîtier de caméra (16) en étant serré sur la partie de boîtier de caméra (16) lorsque la bague de retenue fermée (10) est dans la position de fixation.

2. Un système d'imagerie selon la revendication 1, **caractérisé en ce**
- **que** le premier élément de bague (12) de la bague de retenue fermée (10) est partiellement fendu (14) autour de son périmètre selon un axe de longueur (A) du module de caméra (1).

3. Un système d'imagerie selon la revendication 2, **caractérisé en ce**
- **que** les fentes (14) dans le périmètre du premier élément de bague (12) sont agencées équidistantes dans une direction circonférentielle.

4. Un système d'imagerie selon la revendication 2 ou 3, **caractérisé en ce**
- **que** la distance en direction circonférentielle entre deux fentes (14) agencées de façon adjacente est plus petite que la largeur de l'au moins une saillie (4) du module de caméra (1) en direction circonférentielle.

5. Un système d'imagerie selon l'une des revendications 2 à 4, **caractérisé en ce**
- **que** les fentes (14) sont remplies dudit matériau flexible dudit second élément de bague (13) de la bague de retenue (10).

6. Un système d'imagerie selon l'une quelconque des revendications 2 à 5, **caractérisé en ce**
- **que** le premier élément de bague (12) de la bague de retenue (10) comprend une première partie tubulaire et un collier (11) s'étendant radialement vers l'intérieur depuis la première partie tubulaire.

7. Un système d'imagerie selon la revendication 6, **caractérisé en ce**
- **que** les fentes (14) s'étendent de la première partie tubulaire (12) au collier (11).

8. Un système d'imagerie selon la revendication 6 ou 7, **caractérisé en ce**
- **que** le second élément de bague (13) de la bague de retenue (10) comprend une seconde partie tubulaire, agencée de façon adjacente au collier (11) en direction de l'axe de longueur (A) du module de caméra (1).

9. Un système d'imagerie selon l'une quelconque des revendications précédentes, **caractérisé en ce**
- **que** le module de caméra (1) comprend une forme cylindrique, et
- **que** la bague de retenue fermée (10) comprend une forme de bague circulaire.
